# FASCICULE DE BREVET EUROPEEN

(11) **EP 2 651 693 B1**
(45) Date de publication et mention de la délivrance du brevet: **19.09.2018**
(21) Numéro de dépôt: 11807715.5
(22) Date de dépôt: 14.12.2011
(51) Int. Cl.: B60Q 1/14

(54) **MODULE DE COMMANDE SOUS-VOLANT**
UNTER DEM LENKRAD MONTIERTES STEUERMODUL
CONTROL MODULE MOUNTED BELOW THE STEERING WHEEL

(30) Priorité: 14.12.2010 FR 1004880
(43) Date de publication de la demande: 23.10.2013
(73) Titulaire: SC2N, 94046 Creteil Cedex (FR)
(72) Inventeur: HALLET Michel, 14320 Clinchamps sur Orne (FR)
(74) Mandataire: Pothmann, Karsten
(86) Numéro de dépôt international: PCT/FR2011/000647
(87) Numéro de publication internationale: WO 2012/080596

(56) Documents cités:
- EP-A1- 0 577 499
- EP-A1- 2 130 719
- EP-A2- 0 894 666
- WO-A1-99/30929

## Description

La présente invention concerne un module de commande sous-volant installé en haut de colonne de direction de véhicule automobile. Le module de commande sous-volant présente une manette de commutation permettant de commander par exemple les indicateurs sonores ou lumineux, moyens d'éclairage, d'essuyage ou de lavage de vitres.

On connaît des modules de commande sous-volant comprenant au moins un levier de commande pivotant présentant deux bagues rotatives coaxiales ainsi qu'un premier organe d'actionnement solidaire en rotation de la première bague rotative et un deuxième organe d'actionnement solidaire en rotation de la deuxième bague rotative. La rotation des bagues rotatives entraîne la translation d'un chariot de contactage respectif du module de commande sous-volant pour l'établissement d'un contact frottant sur des pistes associées de contactage d'un circuit électrique via l'organe d'actionnement respectif.

Pour cela, le premier organe d'actionnement présente une portion dentée saillant perpendiculairement de l'extrémité d'une première tige d'actionnement liée à la première bague rotative. La portion dentée engrène avec une portion dentée complémentaire du premier chariot de contactage. De même, le deuxième organe d'actionnement présente une portion dentée saillant perpendiculairement de l'extrémité d'une deuxième tige d'actionnement, la portion dentée engrenant avec une portion dentée complémentaire du deuxième chariot de contactage. La portion dentée du premier organe d'actionnement est décalée longitudinalement de la portion dentée du deuxième organe d'actionnement de manière à entraîner parallèlement et séparément les deux chariots de contactage dans le plan du circuit électrique.

Cet agencement des organes d'actionnement autorise le pivotement du levier de commande dans des positions inclinées où les bagues rotatives peuvent toujours entraîner le déplacement des chariots de contactage. Toutefois, entre les différentes positions inclinées pouvant être prises par le levier de commande et selon la position précédente qu'il occupait, des phénomènes d'hystérésis peuvent apparaître. Autrement dit, des portions dentées associées aux organes d'actionnement peuvent rencontrer des difficultés à engrener parfaitement avec les portions dentées complémentaires des chariots de contactage.

Un module de commande sous-volant selon le préambule de la revendication 1 est connu de EP 2 130719.

Un des buts de la présente invention est de proposer une manette de commutation réduisant l'hystérésis de manière à sécuriser le contact électrique entre le chariot de contactage et les pistes du circuit électrique quelque soit la position actuelle ou précédente prise par le levier de commande.

A cet effet, l'invention a pour objet un module de commande sous-volant comprenant :
- un levier de commande pivotant autour d'un axe de pivotement, présentant un premier organe d'actionnement solidaire en rotation d'une première bague rotative du levier de commande et un deuxième organe d'actionnement solidaire en rotation d'une deuxième bague rotative du levier de commande, le premier et le deuxième organes d'actionnement étant solidaires en pivotement du levier de commande, et
- un premier et un deuxième chariots de contactage pour l'établissement d'un contact frottant sur des pistes associées de contactage d'un circuit électrique du module de commande sous-volant, le premier et le deuxième organes d'actionnement étant agencés à un même niveau du levier de commande et centrés autour de l'axe de pivotement du levier de commande, ledit module de commande sous-volant comportant un premier et un deuxième éléments d'entraînement intermédiaires, respectivement entraînés par le premier et le deuxième organes d'actionnement et entraînant le premier et le deuxième chariots de contactage respectif en translation, caractérisé en ce que le premier et le deuxième organes d'actionnement sont agencés au niveau de l'axe de pivotement du levier de commande, pour entraîner respectivement le premier et le deuxième éléments d'entraînement intermédiaires en rotation selon un axe de rotation respectif perpendiculaire à l'axe de pivotement du levier de commande.

La mise au même niveau des organes d'actionnement le long du levier de commande et leur centrage autour de l'axe de pivotement du levier de commande permet de réduire l'hystérésis étant donné qu'il permet le pivotement du levier de commande entre les éléments d'entraînement intermédiaires, sans pivotement de ces derniers, ce qui limite le déplacement angulaire des organes d'actionnement.

En outre, on conserve l'agencement des organes d'actionnement à l'extrémité du levier de commande, ce qui permet de délocaliser le circuit électrique dans la base du module de commande sous-volant plutôt que dans le levier de commande où l'espace est réduit. De même, on conserve un levier de commande exempt de liaison filaire. En effet, toutes les commandes sont acheminées au circuit électrique du boîtier par des mouvements mécaniques des éléments de la manette de commutation, tels que des rotations, des pivotements, des translations, le contact électrique final étant obtenu par frottement des chariots de contactage sur les pistes électriques. La suppression des fils électriques augmente la fiabilité de la manette de commutation et en diminue de façon conséquente le coût.

Selon une ou plusieurs caractéristiques du module de commande sous-volant, prise seule ou en combinaison,
- le premier élément d'entraînement intermédiaire présente un segment de roue denté engrenant avec un segment de roue denté complémentaire du premier organe d'actionnement, le deuxième élément d'entraînement intermédiaire présente un segment de roue denté engrenant avec un segment de roue denté complémentaire du deuxième organe d'actionnement et la denture des segments de roue dentés des premier et deuxième organes d'actionnement est conformée pour autoriser le pivotement des premier et deuxième organes d'actionnement dans les premier et deuxième éléments d'entraînement intermédiaires respectifs,
- le premier et le deuxième organes d'actionnement présentent une première et une deuxième tiges d'actionnement reliée à la première et deuxième bague rotative respective et débouchant à une même longueur de l'axe longitudinal du levier de commande par lesdits segments de roue denté complémentaires saillant dans un même plan perpendiculaire à l'axe longitudinal,
- les segments de roue dentés complémentaires du premier et du deuxième organes d'actionnement sont agencés sur des côtés opposés des extrémités des tiges d'actionnement,
- les segments de roue dentés complémentaires du premier et du deuxième organes d'actionnement présentent un angle d'ouverture inférieur ou de l'ordre de 90°,
- les arêtes des dents des segments de roue dentés complémentaires des premier et deuxième organes d'actionnement présentent un profil bombé,
- ledit profil bombé présente un rayon de courbure coaxial à l'axe de pivotement du levier de commande,
- le sommet des dents des segments de roue dentés complémentaires des premier et deuxième organes d'actionnement est plat et les arêtes desdits sommets plats présentent une forme convexe,
- le premier et le deuxième éléments d'entraînement intermédiaires sont respectivement munis d'une tige pourvue d'un pas de vis et le chariot de contactage entraîné par l'élément d'entraînement intermédiaire respectif présente un logement dans lequel un pas de vis complémentaire est ménagé, ledit pas de vis étant configuré pour déplacer le chariot de contactage sur le circuit électrique d'un pas de translation adapté pour modifier un état de commutation,
- le chariot de contactage est entraîné en translation suivant la direction longitudinale de l'axe de rotation de l'élément d'entraînement intermédiaire respectif,
- lesdits éléments d'entraînement intermédiaires présentent une forme générale cylindrique bi-étagée dont une première partie porte ledit segment de roue denté en périphérie externe et dont une deuxième partie est formée par ladite tige pourvue d'un pas de vis,
- lesdits éléments d'entraînement intermédiaires sont en matériau plastique.

D'autres avantages et caractéristiques apparaîtront à la lecture de la description de l'invention, ainsi que des dessins annexés sur lesquels :
- la figure 1 représente une vue schématique de dessus d'éléments d'une manette de commutation dont le levier de commande est en position centrale de repos,
- la figure 2 représente une vue schématique de face d'éléments d'une manette de commutation dont le levier de commande est en position centrale de repos,
- la figure 3 est une vue schématique d'éléments de la manette de commutation de la figure 2,
- la figure 4a est une vue schématique simplifiée des dentures et des axes de rotation des éléments d'entraînement intermédiaires et des organes d'actionnement de la manette de commutation de la figure 3 vue de côté,
- la figure 4b est une vue similaire à la figure 4a et dans laquelle le deuxième organe d'entraînement a tourné dans le sens horaire,
- la figure 5 est une vue similaire à la figure 4a dans laquelle le levier de commutation a pivoté dans une position inclinée,
- la figure 6 est une vue schématique des premier et deuxième organes d'actionnement de la figure 5,
- la figure 7 représente une vue schématique de côté d'un premier exemple de réalisation d'un segment de roue denté d'un organe d'actionnement,
- la figure 8 représente une vue schématique agrandie et de face d'un deuxième exemple de réalisation de dent d'un segment de roue denté d'un organe d'actionnement,
- la figure 9 représente une vue schématique agrandie et de face d'un troisième exemple de réalisation de dent d'un segment de roue denté d'un organe d'actionnement,
- la figure 10 représente une vue schématique d'un élément intermédiaire d'entraînement monté dans un chariot à contactage, et
- la figure 11 représente l'élément intermédiaire d'entraînement et le chariot de contactage de la figure 10 à l'état désassemblé.

Sur ces figures, les éléments identiques portent les mêmes numéros de référence.

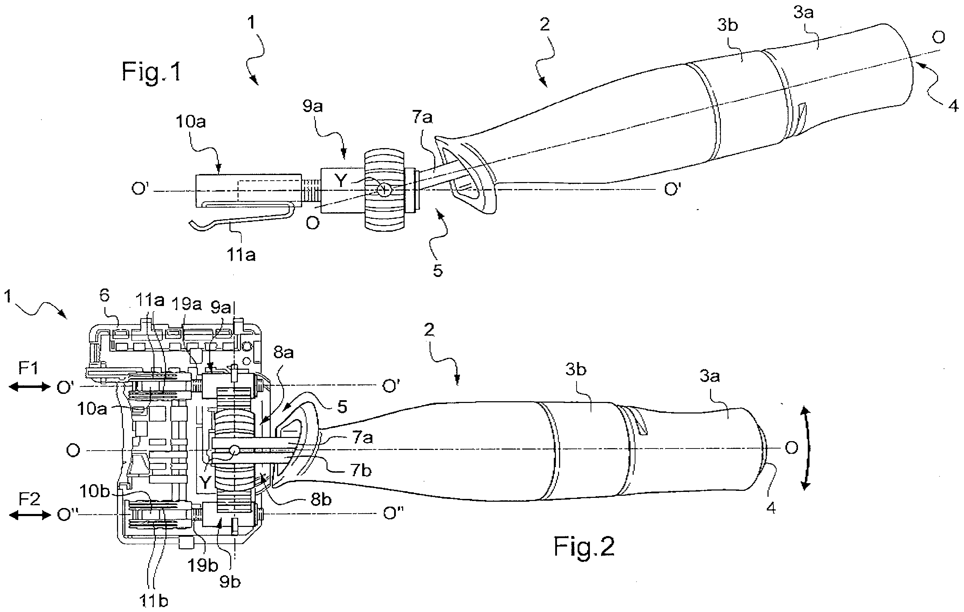

Les figures 1 et 2 représentent une manette de commutation 1 destinée à être montée dans un module de commande sous-volant installé en haut de colonne de direction de véhicule automobile (non représenté), pour commander par exemple les indicateurs sonores ou lumineux, moyens d'éclairage, d'essuyage et de lavage de vitres.

La manette de commutation 1 comporte un levier de commande 2 manipulable par un utilisateur. Le levier de commande 2 est notamment pourvu d'une première et d'une deuxième bague 3a, 3b montées rotatives autour de l'axe de longitudinal O-O (ou axe de rotation) du levier de commande 2.

Les première et deuxième bagues rotatives 3a, 3b sont coaxiales, la première bague rotative 3a est par exemple située à une extrémité libre 4 du levier de commande 2, à l'opposé d'une extrémité proximale 5 d'une base du module de commande sous-volant. La deuxième bague rotative 3b est située entre la première bague rotative 3a et l'extrémité proximale 5 du levier de commande 2. La première et la deuxième bagues rotative 3a, 3b peuvent être tournées indépendamment l'une de l'autre par l'utilisateur pour la commande de fonctions du véhicule automobile. Pat exemple, la rotation de la première bague 3a permet la commande des veilleuses, codes et phares des moyens d'éclairage et la rotation de la deuxième bague 3b permet la commande des antibrouillards avant-arrières des moyens d'éclairage.

Le levier de commande 2 est monté pivotant autour d'un axe de pivotement Y entre une position centrale de repos (figures 1 et 2) et au moins une position inclinée, par exemple pour actionner les indicateurs de changement de direction. En position centrale de repos, l'axe longitudinal O-O du levier de commande 2 peut être légèrement orienté vers l'arrière du volant (voir vue de dessus de la figure 1).

A l'extrémité proximale 5 du levier de commande 2 et comme représente en figure 2, la manette de commutation 1 comporte un boîtier 6 destiné à être branché au module de commutation. A l'intérieur du boîtier 6, le levier de commande 2 comporte un premier et un deuxième organe d'actionnement 8a, 8b. Selon un autre mode de réalisation non représenté, la manette de commutation est intégrée au boîtier du module de commutation.

Le premier organe d'actionnement 8a est solidaire en rotation de la première bague rotative 3a et le deuxième organe d'actionnement 8b est solidaire en rotation de la deuxième bague rotative 3b par exemple via une première et une deuxième tiges d'actionnement 7a, 7b. Le premier et le deuxième organes d'actionnement 8a, 8b peuvent tourner indépendamment l'un de l'autre et sont solidaires en pivotement du levier de commande 2.

Dans le boîtier 6, la manette de commutation 1 comporte également un premier et un deuxième éléments d'entraînement intermédiaires 9a, 9b et un premier et un deuxième chariots de contactage 10a, 10b.

Les premier et deuxième éléments d'entraînement intermédiaires 9a, 9b sont respectivement entraînés par le premier et le deuxième organes d'actionnement 8a, 8b et entraînent respectivement le premier et le deuxième chariots de contactage 10a, 10b en translation.

Les chariots de contactage 10a, 10b sont mobiles en translation sur un jeu de pistes électriques conductrices d'un circuit électrique tel qu'une carte à circuit imprimé ou un circuit surmoulé du module de commutation. Les chariots de contactage 10a, 10b sont par exemple respectivement dotés d'une paire de double lames élastiques conductrices 11a, 11b (figure 2).

Lorsqu'ils sont entraînés par le premier et le deuxième éléments d'entraînement intermédiaires 9a, 9b, les chariots de contactage 10a, 10b établissent en fonction d'une commande d'un utilisateur, un contact électrique par frottement des lames élastiques conductrices 11a, 11b sur les pistes associées de contactage. Par exemple, la rotation d'un cran de la première bague 3a permet la translation d'un pas du chariot de contactage 10a sur la piste électrique associée pour la mise en route des veilleuses.

En outre, le premier et le deuxième organes d'actionnement 8a, 8b sont agencés à un même niveau du levier de commande 2 et sont centrés autour de l'axe de pivotement Y du levier de commande 2. Autrement dit, les organes d'actionnement 8a, 8b sont montés rotatifs coaxialement à l'axe de pivotement Y.

Plus précisément, le premier et le deuxième organes d'actionnement 8a, 8b sont agencés à un même niveau de l'extrémité proximale 5, de part et d'autre de l'axe de pivotement Y du levier de commande 2 pour entraîner respectivement en rotation le premier et le deuxième éléments d'entraînement intermédiaires 9a, 9b selon un axe de rotation respectif O'-O' et O"-O" perpendiculaire à l'axe de pivotement Y du levier de commande 2 (figure 2).

La mise au même niveau des organes d'actionnement 8a, 8b le long du levier de commande 2 et leur centrage autour de l'axe de pivotement Y du levier de commande 2 permet de réduire l'hystérésis étant donné qu'il permet le pivotement du levier de commande 2 entre les éléments d'entraînement intermédiaires 9a, 9b, sans pivotement de ces derniers, ce qui limite le déplacement angulaire des organes d'actionnement 8a, 8b.

En outre, on conserve l'agencement des organes d'actionnement 8a, 8b à l'extrémité 5 du levier de commande 2, ce qui permet de délocaliser le circuit électrique dans la base du module de commande sous-volant plutôt que dans le levier de commande 2 où l'espace est réduit. De même, on conserve un levier de commande 2 exempt de liaison filaire. En effet, toutes les commandes sont acheminées au circuit électrique du boîtier par des mouvements mécaniques des éléments de la manette de commutation 1, tels que des rotations, des pivotements, des translations, le contact électrique final étant obtenu par frottement des pistes électriques. La suppression des fils électriques augmente la fiabilité de la manette de commutation 1 et en diminue de façon conséquente le coût.

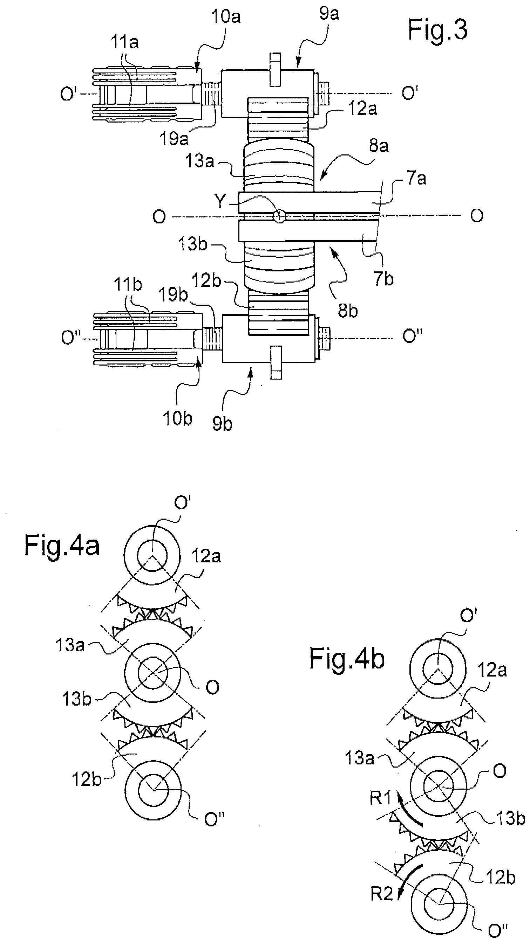

Comme on peut le voir sur l'exemple de réalisation des figures 3, 4, 5 et 6, le premier élément d'entraînement intermédiaire 9a présente un segment de roue denté 12a engrenant avec un segment de roue denté complémentaire 13a du premier organe d'actionnement 8a. Le segment de roue denté complémentaire 13a du premier organe d'actionnement 8a fait saillie perpendiculairement de l'extrémité de la tige d'actionnement 7a.

De même, le deuxième élément d'entraînement intermédiaire 9b présente un segment de roue denté 12b, engrenant avec un segment de roue denté complémentaire 13b du deuxième organe d'actionnement 8b, le segment de roue denté complémentaire 13b saillant perpendiculairement de l'extrémité de la tige d'actionnement 7b.

Les tiges d'actionnement du premier et du deuxième organes d'actionnement 7a, 7b débouchent à une même longueur de l'axe longitudinal O-O du levier de commande 2, les segments de roue denté complémentaires 13a, 13b du premier et du deuxième organes d'actionnement 8a, 8b saillant perpendiculairement dans un même plan perpendiculaire à l'axe longitudinal O-O.

Les segments de roue dentés complémentaires 13a, 13b des premier et deuxième organes d'actionnement 8a, 8b sont agencés sur des côtés opposés des extrémités des tiges d'actionnement 7a, 7b, de part et d'autre de l'axe de pivotement Y du levier de commande 2 (figures 4a et 4b). En outre, les segments de roue dentés complémentaires 13a, 13b présentent un angle d'ouverture inférieur ou de l'ordre de 90°, ce qui permet de faire tourner la première et la deuxième bagues rotatives 3a, 3b d'au moins 90°.

La figure 4b représente un exemple pour lequel la rotation de la deuxième bague 3b du levier de commande 2 a entraîné la rotation du deuxième organe d'actionnement 8b dans le sens de rotation horaire (flèche R1) d'un angle de l'ordre de 10° par rapport à la position précédente de la figure 4a, entraînant à son tout la rotation de l'élément d'entraînement intermédiaire 9b dans le sens antihoraire (flèche R2).

On prévoit également que la denture des segments de roue dentés complémentaires 13a, 13b soit conformée pour autoriser le pivotement des organes d'actionnement 8a, 8b dans les dentures des éléments d'entraînement intermédiaires 9a, 9b, respectifs.

Ainsi, le pivotement des organes d'actionnement 8a, 8b n'entraîne pas le pivotement des éléments d'entraînement intermédiaires 9a, 9b. En revanche en position inclinée du levier de commande 2, l'engrènement entre d'une part, le premier organe d'actionnement 8a et le premier élément d'entraînement intermédiaire 9a et d'autre part, le deuxième organe d'actionnement 8b et le deuxième élément d'entraînement intermédiaire 9b, sont conservés de sorte que le pivotement des premier et deuxième organes d'actionnement 8a, 8b n'empêche pas l'entraînement en rotation des éléments d'entraînement intermédiaires 9a, 9b.

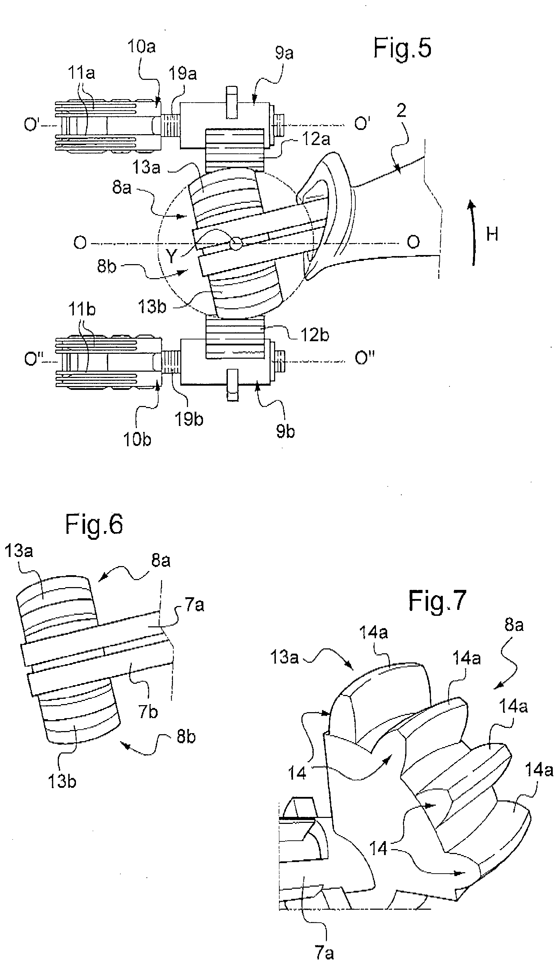

Selon un premier exemple de réalisation représenté sur les figures 5, 6 et 7, les segments de roue dentés complémentaires 13a, 13b présentent un angle d'ouverture de l'ordre de 90°.

Le segment de roue denté complémentaire 13a, 13b présente par exemple quatre dents 14 régulièrement espacées dont les arêtes 14a présentent un profil bombé. Le profil bombé présente par exemple un rayon de courbure coaxial à l'axe de pivotement Y du levier de commande 2 (figure 5). Les dents 14 des segments de roue dentés complémentaires 13a, 13b sont par exemple symétriques.

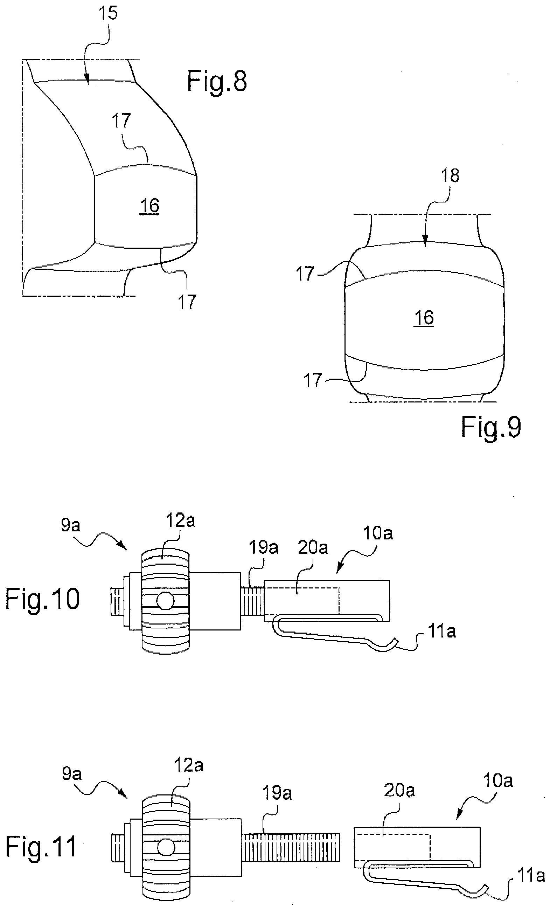

Selon un deuxième exemple de réalisation représenté en figure 8, les dents 15 des segments de roue dentés complémentaires 13a, 13b des premier et deuxième organes d'actionnement 8a, 8b sont asymétriques. En outre, le sommet 16 des dents 15 est plat et les arêtes 17 des sommets plats 16 présentent une forme convexe.

Selon un troisième exemple de réalisation représenté en figure 9, le sommet 16 des dents 18 des segments de roue dentés complémentaires 13a, 13b est plat et les arêtes 17 des sommets plats 16 présentent une forme convexe. En outre, les dents 18 sont symétriques.

Par ailleurs, selon un exemple de réalisation mieux visible sur les figures 10 et 11, le premier et le deuxième éléments d'entraînement intermédiaires 9a, 9b sont respectivement munis d'une tige pourvue d'un pas de vis 19a, 19b, telle qu'une vis sans fin. En complément, les chariots de contactage 10a, 10b présentent un logement dans lequel un pas de vis 20a, 20b complémentaire à la tige 19a, 19b est ménagé. La tige pourvue d'un pas de vis 19a, 19b est insérée dans le logement associé de sorte que lorsque l'élément d'entraînement intermédiaire 9a ou 9b tourne, le chariot de contactage 10a, 10b avance ou recule le long de la tige pourvue d'un pas de vis associée 19a, 19b frottant les lames élastiques conductrices 11a ou 11b sur les pistes associées de contactage. En outre, le pas de vis est configuré pour déplacer le chariot de contactage 10a, 10b sur les pistes de contactage du circuit électrique d'un pas de translation adapté pour modifier un état de commutation.

Ainsi, le chariot de contactage 10a est entraîné en translation suivant la direction longitudinale de l'axe de rotation O'-O' de l'élément d'entraînement intermédiaire 9a dans l'un des deux sens de la flèche F1 (voir figure 2) selon le sens de rotation de la bague rotative 3a. De même, le chariot de contactage 10b peut être entraîné en translation suivant la direction longitudinale de l'axe de rotation O"-O" de l'élément d'entraînement intermédiaire 9b dans l'un des deux sens de la flèche F2 selon le sens de rotation de la bague rotative 3a. Cet agencement permettant d'entraîner le chariot de contactage 10a ou 10b en frottement sur les pistes du circuit électrique suivant une direction commune avec l'axe de rotation de l'élément d'entraînement respectif 9a, 9b permet d'obtenir une manette de commutation robuste pour laquelle le contact électrique est particulièrement assuré.

Pour cela, les éléments d'entraînement intermédiaires 9a et 9b présentent par exemple une forme générale cylindrique bi-étagée dont une première partie présente une portion dentée en périphérie externe formant le segment de roue denté 12a et dont une deuxième partie est pourvue d'un pas de vis 19a. Les éléments d'entraînement intermédiaires 9a, 9b sont par exemple en matériau plastique, ce qui permet de réduire les coûts de fabrication.

On peut également inverser le dispositif. Par exemple, le premier et le deuxième éléments d'entraînement intermédiaires 9a, 9b présentent un logement dans lequel un pas de vis est ménagé et le chariot de contactage 10a, 10b est muni d'une tige pourvue d'un pas de vis complémentaire (non représente).

En fonctionnement, selon la commande souhaitée, l'utilisateur pivote le levier de commande 2 ou tourne dans un sens ou l'autre l'une des deux bagues rotatives 3a, 3b, d'un ou de plusieurs crans.

Par exemple, à partir de la position centrale de repos, la rotation de la première bague rotative 3a selon l'axe de rotation. O-O est transmise au premier organe d'actionnement Sa via la tige d'actionnement 7a, indépendamment du deuxième organe d'actionnement 8b. La rotation du premier organe d'actionnement 8a entraîne la rotation du premier élément d'entraînement intermédiaire 9a selon l'axe de rotation O'-O', perpendiculaire à l'axe de pivotement Y. La rotation du premier élément d'entraînement intermédiaire 9a fait avancer ou reculer le premier chariot de contactage 10a sur la tige pourvue d'un pas de vis 19a, longitudinalement selon l'axe de rotation O'-O', pour contacter par frottement la piste électrique associée à la commande souhaitée par l'utilisateur.

L'utilisateur peut de même tourner la deuxième bague rotative 3b indépendamment de la première bague rotative 3a, entraînant la rotation du deuxième élément d'entraînement intermédiaire 9b selon l'axe de rotation O"-O", perpendiculaire à l'axe de pivotement Y. La rotation du deuxième élément d'entraînement intermédiaire 9b fait avancer ou reculer le deuxième chariot de contactage 10b sur la tige pourvue d'un pas de vis 19b, longitudinalement selon l'axe de rotation O"-O".

En outre l'utilisateur peut pivoter le levier de commande 2 autour de l'axe de pivotement Y dans une position inclinée. Par exemple, en pivotement du levier de commande 2 vers le haut (voir flèche H sur la figure 5), la denture bombée des segments de roue dentés 13a du premier organe d'actionnement 8a pivote dans la denture du segment de roue dentée 12a de l'élément d'entraînement intermédiaire 9a qui n'est pas entraîné en pivotement. L'utilisateur peut alors tourner l'une des bagues rotative 3a ou 3b sans risque de ne pas provoquer la modification du contact électrique par frottement du chariot de contactage 10a.

## Revendications

1. Module de commande sous-volant comprenant :
- un levier de commande (2) pivotant autour d'un axe de pivotement (Y), présentant un premier organe d'actionnement (8a) solidaire en rotation d'une première bague rotative (3a) du levier de commande (2) et un deuxième organe d'actionnement (8b) solidaire en rotation d'une deuxième bague rotative (3b) du levier de commande (2), le premier et le deuxième organes d'actionnement (8a, 8b) étant solidaires en pivotement du levier de commande (2), et
- un premier et un deuxième chariots de contactage (10a, 10b) pour l'établissement d'un contact frottant sur des pistes associées de contactage d'un circuit électrique du module de commande sous-volant, le premier et le deuxième organes d'actionnement (8a, 8b) étant agencés à un même niveau du levier de commande (2) et centrés autour de l'axe de pivotement (Y) du levier de commande (2), ledit module de commande sous-volant comportant un premier et un deuxième éléments d'entraînement intermédiaires (9a, 9b), respectivement entraînés par le premier et le deuxième organes d'actionnement (8a, 8b) et entraînant le premier et le deuxième chariots de contactage (10a, 10b) respectif en translation, **caractérisé en ce que** le premier et le deuxième organes d'actionnement (8a, 8b) sont agencés au niveau de l'axe de pivotement (Y) du levier de commande (2), pour entraîner respectivement le premier et le deuxième éléments d'entraînement intermédiaires (9a, 9b) en rotation selon un axe de rotation respectif (O'-O', O"-O") perpendiculaire à l'axe de pivotement (Y) du levier de commande (2).

2. Module de commande sous-volant selon selon la revendication 1, **caractérisé en ce que** le premier élément d'entraînement intermédiaire (9a) présente un segment de roue denté (12a) engrenant avec un segment de roue denté complémentaire (13a) du premier organe d'actionnement (8a), **en ce que** le deuxième élément d'entraînement intermédiaire (9b) présente un segment de roue denté (12b) engrenant avec un segment de roue denté complémentaire (13b) du deuxième organe d'actionnement (8b) et **en ce que** la denture des segments de roue dentés (13a, 13b) des premier et deuxième organes d'actionnement (8a, 8b) est conformée pour autoriser le pivotement des premier et deuxième organes d'actionnement (8a, 8b) dans les premier et deuxième éléments d'entraînement intermédiaires respectifs (9a, 9b).

3. Module de commande sous-volant selon la revendication 2, **caractérisé en ce que** le premier et le deuxième organes d'actionnement (8a, 8b) présentent une première et une deuxième tiges d'actionnement (7a, 7b) reliée à la première et deuxième bague rotative (3a, 3b) respective et débouchant à une même longueur de l'axe longitudinal (O-O) du levier de commande (2) par lesdits segments de roue denté complémentaires (13a, 13b) saillant dans un même plan perpendiculaire à l'axe longitudinal (O-O).

4. Module de commande sous-volant selon la revendication 3, **caractérisé en ce que** les segments de roue dentés complémentaires (13a, 13b) du premier et du deuxième organes d'actionnement (8a, 8b) sont agencés sur des côtés opposés des extrémités des tiges d'actionnement (7a, 7b).

5. Module de commande sous-volant selon la revendication 4, **caractérisé en ce que** les segments de roue dentés complémentaires (13a, 13b) du premier et du deuxième organes d'actionnement (8a, 8b) présentent un angle d'ouverture inférieur ou de l'ordre de 90°.

6. Module de commande sous-volant selon l'une des revendications 2 à 5, **caractérisé en ce que** les arêtes (14a) des dents (14) des segments de roue dentés complémentaires (13a, 13b) des premier et deuxième organes d'actionnement (8a, 8b) présentent un profil bombé.

7. Module de commande sous-volant selon la revendication 6, **caractérisé en ce que** ledit profil bombé présente un rayon de courbure coaxial à l'axe de pivotement (Y) du levier de commande (2).

8. Module de commande sous-volant selon l'une des revendications 2 à 5, **caractérisé en ce que** le sommet (16) des dents (15, 18) des segments de roue dentés complémentaires (13a, 13b) des premier et deuxième organes d'actionnement (8a, 8b) est plat et **en ce que** les arêtes (17) desdits sommets plats (16) présentent une forme convexe.

9. Module de commande sous-volant selon l'une des revendications 1 à 8, **caractérisé en ce que** le premier et le deuxième éléments d'entraînement intermédiaires (9a, 9b) sont respectivement munis d'une tige pourvue d'un pas de vis (19a, 19b) et **en ce que** le chariot de contactage (10a, 10b) entraîné par l'élément d'entraînement intermédiaire respectif (9a, 9b) présente un logement dans lequel un pas de vis complémentaire (20a, 20b) est ménagé, ledit pas de vis étant configuré pour déplacer le chariot de contactage (10a, 10b) sur le circuit électrique d'un pas de translation adapté pour modifier un état de commutation.

10. Module de commande sous-volant selon la revendication 9, prise ensemble avec l'une des revendications 3 à 9, **caractérisé en ce que** le chariot de contactage (10a, 10b) est entraîné en translation suivant la direction longitudinale de l'axe de rotation (O'-O', O"-O") de l'élément d'entraînement intermédiaire (9a, 9b) respectif.

11. Module de commande sous-volant selon la revendication 10, **caractérisé en ce que** lesdits éléments d'entraînement intermédiaires (9a, 9b) présentent une forme générale cylindrique bi-étagée dont une première partie porte ledit segment de roue denté (12a, 12b) en périphérie externe et dont une deuxième partie est formée par ladite tige pourvue d'un pas de vis (19a, 19b).

12. Module de commande sous-volant selon la revendication 11, **caractérisé en ce que** lesdits éléments d'entraînement intermédiaires (9a, 9b) sont en matériau plastique.

## Patentansprüche

1. Lenkrad-Bedienmodul umfassend:
- einen sich um eine Schwenkachse (Y) schwenkenden Schalthebel (2) mit einem sich mit einem ersten Drehring (3a) drehenden ersten Betätigungselement (8a) des Schalthebels (2) und einem sich mit einem zweiten Drehring (3b) des Schalthebels (2) drehenden zweiten Betätigungselement (8b), wobei das erste und das zweite Betätigungselement (8a, 8b) mit dem Schalthebel (2) schwenken, und
- einen ersten und zweiten Kontaktschlitten (10a, 10b) zum Herstellen eines Schleifkontakts auf den entsprechenden Kontaktbahnen einer elektrischen Schaltung des Lenkrad-Bedienmoduls,
wobei das erste und das zweite Betätigungselement (8a, 8b) auf einer gleichen Höhe des Schalthebels (2) und mittig um die Schwenkachse (Y) des Schalthebels (2) angeordnet sind, wobei das Lenkrad-Bedienmodul ein erstes und zweites Zwischenantriebselement (9a, 9b) umfasst, die jeweils vom ersten und zweiten Betätigungselement (8a, 8b) angetrieben sind und jeweils den ersten und zweiten Kontaktschlitten (10a, 10b) in einer Verschiebebewegung antreiben,
**dadurch gekennzeichnet, dass** das erste und das zweite Betätigungselement (8a, 8b) auf der Höhe der Schwenkachse (Y) des Schalthebels (2) angeordnet sind, um jeweils das erste und zweite Zwischenantriebselement (9a, 9b) in einer Drehbewegung um eine entsprechende Drehachse (O'-O', O"-O") senkrecht zur Schwenkachse (Y) des Schalthebels (2) anzutreiben.

2. Lenkrad-Bedienmodul nach Anspruch 1, **dadurch gekennzeichnet, dass** das erste Zwischenantriebselement (9a) ein in ein ergänzendes Zahnradsegment (13a) des ersten Betätigungselements (8a) eingreifendes Zahnradsegment (12a) aufweist, dass das zweite Zwischenantriebselement (9b) ein in ein ergänzendes Zahnradsegment (13b) des zweiten Betätigungselements (8b) eingreifendes Zahnradsegment (12b) aufweist und dass die Zähnung der Zahnradsegmente (13a, 13b) des ersten und zweiten Betätigungselements (8a, 8b) so ausgebildet ist, dass das Schwenken des ersten und zweiten Betätigungselements (8a, 8b) jeweils in dem ersten und zweiten Zwischenantriebselement (9a, 9b) ermöglicht wird.

3. Lenkrad-Bedienmodul nach Anspruch 2, **dadurch gekennzeichnet, dass** das erste und das zweite Betätigungselement (8a, 8b) eine jeweils mit dem ersten und zweiten Drehring (3a, 3b) verbundene und an einer gleichen Länge der Längsachse (O-O) des Schalthebels (2) durch die ergänzenden Zahnradsegmente (13a, 13b) hervorstehend auf einer gleichen Ebene senkrecht zur Längsachse (O-O) endende erste und zweite Betätigungsstange (7a, 7b) aufweisen.

4. Lenkrad-Bedienmodul nach Anspruch 3, **dadurch gekennzeichnet, dass** die ergänzenden Zahnradsegmente (13a, 13b) des ersten und zweiten Betätigungselements (8a, 8b) an den gegenüberliegenden Seiten der Enden der Betätigungsstangen (7a, 7b) angeordnet sind.

5. Lenkrad-Bedienmodul nach Anspruch 4, **dadurch gekennzeichnet, dass** die ergänzenden Zahnradsegmente (13a, 13b) des ersten und zweiten Betätigungselements (8a, 8b) einen Öffnungswinkel kleiner gleich 90° aufweisen.

6. Lenkrad-Bedienmodul nach einem der Ansprüche 2 bis 5, **dadurch gekennzeichnet, dass** die Flanken (14a) der Zähne (14) der ergänzenden Zahnradsegmente (13a, 13b) des ersten und zweiten Betätigungselements (8a, 8b) ein balliges Profil aufweisen.

7. Lenkrad-Bedienmodul nach Anspruch 6, **dadurch gekennzeichnet, dass** das ballige Profil einen Krümmungsradius koaxial zur Schwenkachse (Y) des Schalthebels (2) aufweist.

8. Lenkrad-Bedienmodul nach einem der Ansprüche 2 bis 5, **dadurch gekennzeichnet, dass** die Spitze (16) der Zähne (15, 18) der ergänzenden Zahnradsegmente (13a, 13b) des ersten und zweiten Betätigungselements (8a, 8b) flach ist und dass die Flanken (17) der flachen Spitzen (16) eine konvexe Form aufweisen.

9. Lenkrad-Bedienmodul nach einem der Ansprüche 1 bis 8, **dadurch gekennzeichnet, dass** das erste und das zweite Zwischenantriebselement (9a, 9b) jeweils mit einer mit einem Gewindegang (19a, 19b) ausgestatteten Stange versehen sind und dass der vom jeweiligen Zwischenantriebselement (9a, 9b) angetriebene Kontaktschlitten (10a, 10b) eine Aufnahme aufweist, in der ein ergänzender Gewindegang (20a, 20b) angeordnet ist, wobei der Gewindegang zum Bewegen des Kontaktschlittens (10a, 10b) auf der elektrischen Schaltung um einen entsprechenden Verschiebeschritt zum Ändern eines Schaltzustands ausgebildet ist.

10. Lenkrad-Bedienmodul nach Anspruch 9 in Kombination mit einem der Ansprüche 3 bis 9, **dadurch gekennzeichnet, dass** der Kontaktschlitten (10a, 10b) in einer Verschiebebewegung in der Längsrichtung der Drehachse (O'-O', O"-O") des jeweiligen Zwischenantriebselements (9a, 9b) angetrieben wird.

11. Lenkrad-Bedienmodul nach Anspruch 10, **dadurch gekennzeichnet, dass** die Zwischenantriebselemente (9a, 9b) eine im Wesentlichen zylindrische Form in zwei Stufen aufweisen, wobei ein erster Teil das Zahnradsegment (12a, 12b) am äußeren Umfang trägt und ein zweiter Teil von der mit einem Gewindegang (19a, 19b) ausgestatteten Stange gebildet wird.

12. Lenkrad-Bedienmodul nach Anspruch 11, **dadurch gekennzeichnet, dass** die Zwischenantriebselemente (9a, 9b) aus einem Kunststoff bestehen.

## Claims

1. Beneath-steering-wheel control module comprising:
- a control lever (2) pivoting about an axis of pivoting (Y), having a first actuating member (8a) that rotates as one with a first rotary ring (3a) of the control lever (2) and a second actuating member (8b) that rotates as one with a second rotary ring (3b) of the control lever (2), the first and second actuating members (8a, 8b) pivoting as one with the control lever (2), and
- one first and one second contact carriage (10a, 10b) for establishing rubbing contact with associated contact tracks of an electric circuit of the beneath-steering-wheel control module,
the first and second actuating members (8a, 8b) being arranged at a same level on the control lever (2) and centered about the axis of pivoting (Y) of the control lever (2), said beneath-steering-wheel control module comprising a first and a second intermediate drive element (9a, 9b) which are respectively driven by the first and second actuating members (8a, 8b) and which drive the translational movement of the respective first and second contact carriages (10a, 10b), **characterized in that** the first and second actuating members (8a, 8b) are arranged at the level of the axis of pivoting (Y) of the control lever (2) in order respectively to drive the rotation of the first and second intermediate drive elements (9a, 9b) about a respective axis of rotation (O'-O', O"-O") perpendicular to the axis of pivoting (Y) of the control lever (2).

2. Beneath-steering-wheel control module according to Claim 1, **characterized in that** the first intermediate drive element (9a) has a toothed wheel segment (12a) meshing with a complementary toothed wheel segment (13a) of the first actuating member (8a), **in that** the second intermediate drive element (9b) has a toothed wheel segment (12b) meshing with a complementary toothed wheel segment (13b) of the second actuating member (8b), and **in that** the toothing of the toothed wheel segments (13a, 13b) of the first and second actuating members (8a, 8b) is configured in such a way as to allow the first and second actuating members (8a, 8b) to pivot in respective first and second intermediate drive elements (9a, 9b).

3. Beneath-steering-wheel control module according to Claim 2, **characterized in that** the first and second actuating members (8a, 8b) have a first and a second actuating rod (7a, 7b) which is connected to the respective first and second rotary ring (3a, 3b) and opens out, at a same length along the longitudinal axis (O-O) of the control lever (2), into said complementary toothed wheel segments (13a, 13b) which project in one and the same plane perpendicular to the longitudinal axis (O-O).

4. Beneath-steering-wheel control module according to Claim 3, **characterized in that** the complementary toothed wheel segments (13a, 13b) of the first and second actuating members (8a, 8b) are arranged on opposite sides of the ends of the actuating rods (7a, 7b) .

5. Beneath-steering-wheel control module according to Claim 4, **characterized in that** the complementary toothed wheel segments (13a, 13b) of the first and second actuating members (8a, 8b) subtend an angle of the order of 90° or less.

6. Beneath-steering-wheel control module according to one of Claims 2 to 5, **characterized in that** the tips (14a) of the teeth (14) of the complementary toothed wheel segments (13a, 13b) of the first and second actuating members (8a, 8b) have a domed profile.

7. Beneath-steering-wheel control module according to Claim 6, **characterized in that** said domed profile has a radius of curvature coaxial with the axis of pivoting (Y) of the control lever (2).

8. Beneath-steering-wheel control module according to one of Claims 2 to 5, **characterized in that** the top land (16) of the teeth (15, 18) of the complementary toothed wheel segments (13a, 13b) of the first and second actuating members (8a, 8b) is flat and **in that** the tips (17) of said flat top lands (16) have a convex shape.

9. Beneath-steering-wheel control module according to one of Claims 1 to 8, **characterized in that** the first and second intermediate drive elements (9a, 9b) are respectively equipped with a rod that has a screw thread (19a, 19b), and **in that** the contact carriage (10a, 10b) driven by the respective intermediate drive element (9a, 9b) has a housing in which a complementary screw thread (20a, 20b) is formed, said screw thread being configured to move the contact carriage (10a, 10b) along the electric circuit by a translational step suited to modifying a switching state.

10. Beneath-steering-wheel control module according to Claim 9 considered together with one of Claims 3 to 9, **characterized in that** the contact carriage (10a, 10b) is translationally driven in the longitudinal direction of the axis of rotation (O'-O', O"-O") of the respective intermediate drive element (9a, 9b).

11. Beneath-steering-wheel control module according to Claim 10, **characterized in that** said intermediate drive elements (9a, 9b) have a two-stage cylindrical overall shape, a first part of which bears said toothed wheel segment (12a, 12b) on the external periphery and a second part of which is formed by said rod provided with a screw thread (19a, 19b).

12. Beneath-steering-wheel control module according to Claim 11, **characterized in that** the said intermediate drive elements (9a, 9b) are made of plastic.
